# EUROPEAN PATENT SPECIFICATION

(11) **EP 0 868 299 B1**
(45) Date of publication and mention of the grant of the patent: **26.02.2003**
(21) Application number: 96930889.9
(22) Date of filing: 17.09.1996
(51) Int. Cl.: B29D 30/38, B29D 30/44, B29C 47/02

(54) **A METHOD AND APPARATUS FOR BUILDING A LAMINATE AND FORMING A CARCASS SUBASSEMBLY FOR A TIRE FROM UNREINFORCED TIRE COMPONENTS**
VERFAHREN UND VORRICHTUNG ZUR HERSTELLUNG EINES LAMINATS UND ZUM TEILAUFBAUEN EINER REIFENKARKASSE AUS UNVERSTÄRKTEN REIFENBESTANDTEILEN
PROCEDE ET APPAREIL PERMETTANT DE CONSTRUIRE UN STRATIFIE ET DE FORMER UN SOUS-ENSEMBLE DE CARCASSE POUR UN PNEU A PARTIR DE CONSTITUANTS DE PNEU NON RENFORCES

(30) Priority: 15.12.1995 US 572929
(43) Date of publication of application: 07.10.1998
(73) Proprietor: The Goodyear Tire & Rubber Company, Akron, Ohio 44316-0001 (US)
(72) Inventor: VANNAN, Frederick, Forbes, Clinton, OH 44216 (US); HEAD, William, James, Ravenna, OH 44266 (US)
(74) Representative: Leitz, Paul
(86) International application number: US9614816
(87) International publication number: WO97022463

(56) References cited:
- EP-A- 0 246 497
- GB-A- 580 838
- US-A- 1 353 934
- US-A- 1 509 363
- US-A- 1 933 692
- US-A- 5 030 079
- US-A- 5 513 560
- PATENT ABSTRACTS OF JAPAN vol. 95, no. 008 & JP,A,07 214583 (TOSHIBA CORP), 15 August 1995,

## Description

### Background of the Invention

This invention relates to a method and apparatus for building a laminate 10A and in forming a subassembly 10 for a pneumatic tire from unreinforced tire components.

Historically, the pneumatic tire has been fabricated as a laminate structure of generally toroidal shape having beads, a tread, belt reinforcement and a carcass. The tire is made of rubber, fabric, and steel. The manufacturing technologies employed for the most part involve assembling the many tire components from flat strips or sheets of material. Each component is placed on a building drum and cut to length such that the ends of a component meet or overlap creating a splice.

In the first stage of assembly the carcass would include one or more plies, and a pair of sidewalls, a pair of apexes, an innerliner (for a tubeless tire), a pair of chafers and perhaps a pair of gum shoulder strips. Annular bead cores can be added during this first stage of tire building, and the ply or plies can be turned around the bead cores to form the "ply turnups."

The carcass components (excluding the bead cores) would be either "butt spliced" or "lap spliced." A butt splice has the component ends joined but not overlapped, a lap splice has overlapping ends.

This intermediate article of manufacture would be cylindrically formed at this point in the first stage of assembly. The cylindrical carcass is expanded into a toroidal shape after completion of the first-stage of tire building. Reinforcing belts and the tread are added to the intermediate article during a second stage of tire manufacture, which can occur using the same building drum or work station or at a separate shaping station.

During the expansion of the carcass, tensile stresses are imposed on the spliced and uncured components of the tire carcass.

In the case of automobile or light truck tires, lap splices were preferred because the splice remained intact whereas butt splices would tend to open or fail. Even with the good adhesion of the lap splice the cords adjacent the splice tended to be stretched compensating for the overlapped two layers of cords at the splice. This localized stretching creates a nonuniformity that is readily visible under x-ray, ultrasonic display or by physically cutting the tire and visually inspecting it.

The tire designer, in order to prevent the creation of tire uniformity problems has historically insured that the splices of the various layers of components were not circumferentially aligned. This non-alignment of splice joints was believed to improve the carcass overall durability and uniformity, as measured by the amount of force variation and the balance of the tire. Tire engineers also have believed that tire uniformity could be improved if these discontinuities were deliberately circumferentially spaced around the carcass. This meant that each component had to be applied to the ply at the tire building station where each component was cut and spliced in a spaced order.

A U.S. patent issued in 1917 taught the use of an apparatus to assemble strips to form a tire tread subassembly. US-A- 1 353 934 issued in 1917 teaches in order to create the strips of proper width and location the components were required to be trimmed at the apparatus. This tread subassembly included a cord reinforced belt and optionally could include a pair of sidewalls. This method of assembly required the sidewalls to be turned down upon assembly to a tire casing which one skilled in the art would readily appreciate is very difficult in that the unreinforced sidewall cannot conform to the compressive stresses of being turned radially inward without a high likelihood of localizing buckling. This created tremendous non-uniformities in the tire and therefore has been heretofore abandoned as a viable method of tire assembly.

### Summary of the Invention

The invention provides an apparatus for building a laminate from an assembly of unreinforced tire components suitable for use in a pneumatic tire and a method for building such a laminate as defined in the appended claims.

### Brief Description of the Drawings

Figure 1 illustrates a perspective view of one embodiment of the apparatus 200 made in accordance with the invention, the apparatus 200 illustrates the laminate 10A being formed by applying the formed tire components to the conveyor 207 or the liner component 50, the liner 50 formed at the apparatus 200 being utilized or performing the function of the carrier member 20 having the other formed components affixed thereto. After forming the laminate 10A, a separation liner 11 is attached and the laminate 10A can then be wound into rolls or spools 210.
Figure 2A illustrates an alternative use of the apparatus 200 whereby the carrier member 20 is a fabric or rubber sheet supplied from rolls 211 and all the formed components being attached to the carrier member 20 forming the laminate 10A which is wound onto rolls or spools 210.
Figure 2B illustrates another alternative use of the apparatus 200 wherein the liner 50 is supplied to the apparatus 200 in sheets of a fixed width W_{L} from large rolls or spools, the liner 50 previously being formed on a conventional calender as illustrated in Figure 2C, cut to the width (W_{L}) and wound onto the rolls 211 with a separation liner 11 attached thereto. The liner 50, with the separation liner 11 removed, is fed into the apparatus 200 and the tire components are formed and simultaneously attached directly to the liner 50 the liner 50 being the carrier member 20.
Figure 3A illustrates in cross section one half of the laminated preferred embodiment subassembly 10 prior to being formed cylindrically upon a tire building drum, the building drum not illustrated. The opposite half of the subassembly 10 not illustrated generally but not necessarily is identical to the illustrated portion. Figs. 3B-3G show the subassembly in various additional views. Fig. 3H shows the subassembly 10 forming part of an unvulcanized carcass toroidally shaped after splicing.
Figure 4 is a top view of one calender 302, a portion of the calender 302 being shown in cross-section.
Figure 5 is a front view of the calender 302 taken along lines 5-5 of Figure 4.
Figure 6 is an front view of the calender 302 showing the calender roller support ends 310,312 in an expanded position and the roller 350,352 detached.
Figure 7 is a perspective view of the calender 302 with rollers 350,352 attached.
Figure 8 is a perspective view of the calender 302 with rollers 350,352 detached.
Figure 9 is a perspective view of a roller transfer mechanism 400.
Figure 10 is second view of the roller transfer mechanism 400 depicting rollers 350,352 being inserted into the apparatus.
Figure 11 is a third view of the transfer mechanism 400 being moved to a roller staging area 420.

### Definitions

"Apex" means an elastomeric filler located radially above the bead and interposed between the plies and the ply turnup.

"Axial" and "axially" means the lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.

"Casing" means the tire carcass and associated tire components excluding the tread.

"Chafers" refers to narrow strips of material placed around the outside of the bead to protect cord plies from the rim, distribute flexing above the rim, and to seal the tire.

"Circumferential" means lines or directions extending along the perimeter of the surface of the annular tread perpendicular to the axial direction.

"Cord" means one of the reinforcement strands of which the plies in the tire are comprised.

"Equatorial Plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Insert" means an elastomeric member used as a stiffening member usually located in the sidewall region of the tire.

"Ply" means a continuous layer of rubber-coated parallel cords.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Shoulder" means the upper portion of sidewall just below the tread edge.

"Sidewall" means that portion of a tire between the tread and the bead.

"Subassembly" means an unvulcanized assembly of laminated unreinforced tire components to which a cord reinforced ply or plies and other components can be added to form a tire carcass.

"Tread" means a rubber component which when bonded to a tire carcass includes that portion of the tire that come into contact with the road when the tire is normally inflated and under normal load.

"Tread Width" means the arc length of the tread surface in the axial direction, that is, in a plane parallel to the axis of rotation of the tire.

### Detailed Description of the Preferred Embodiment

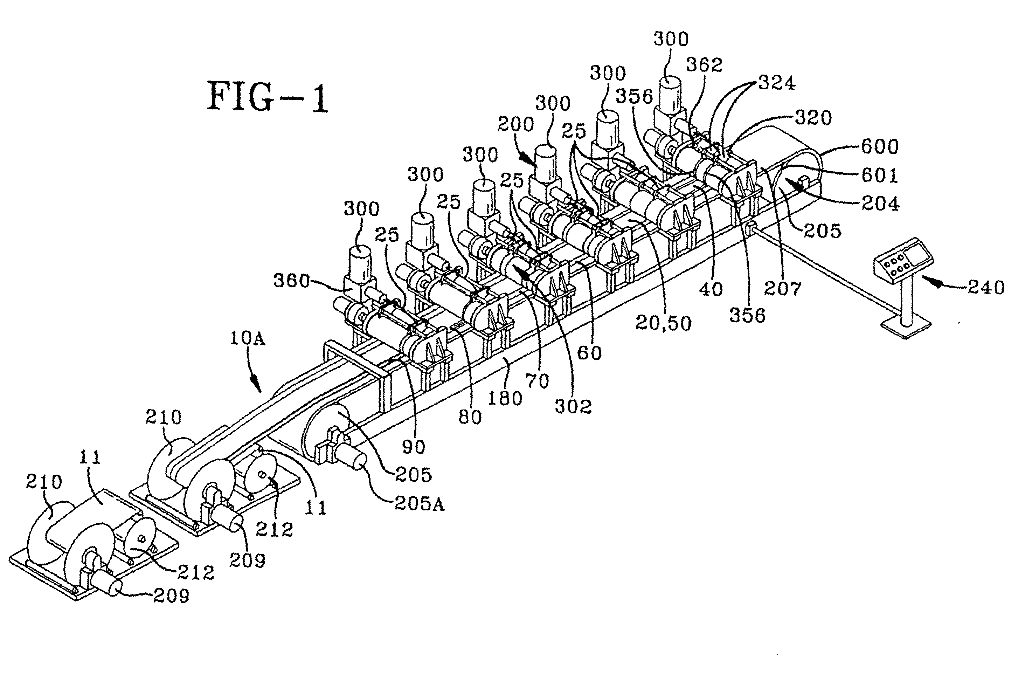

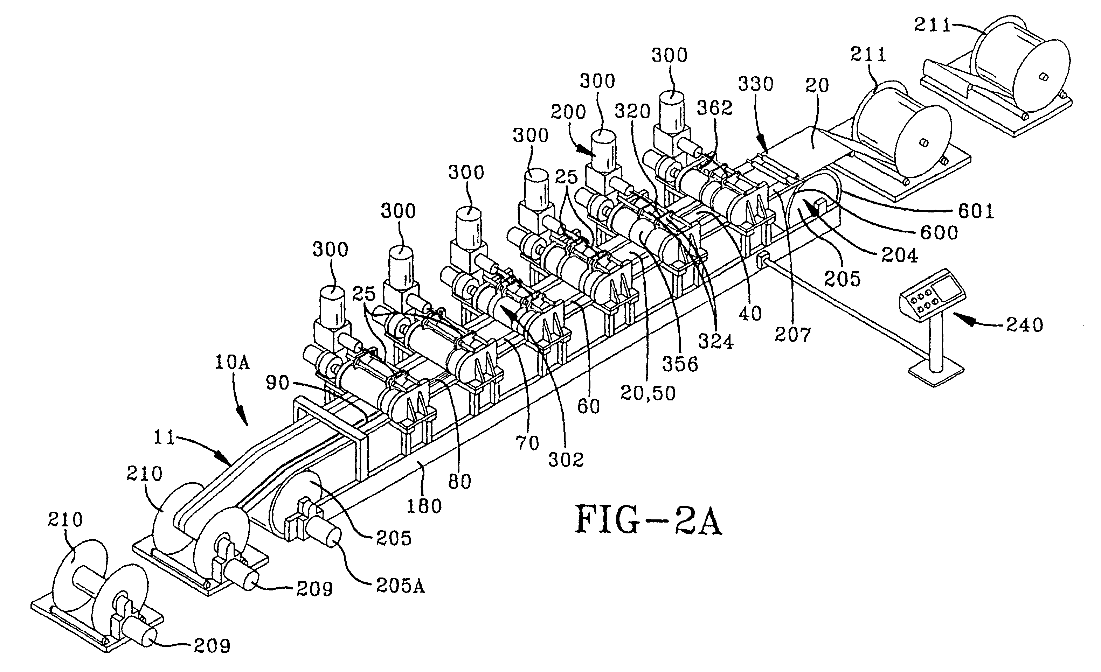

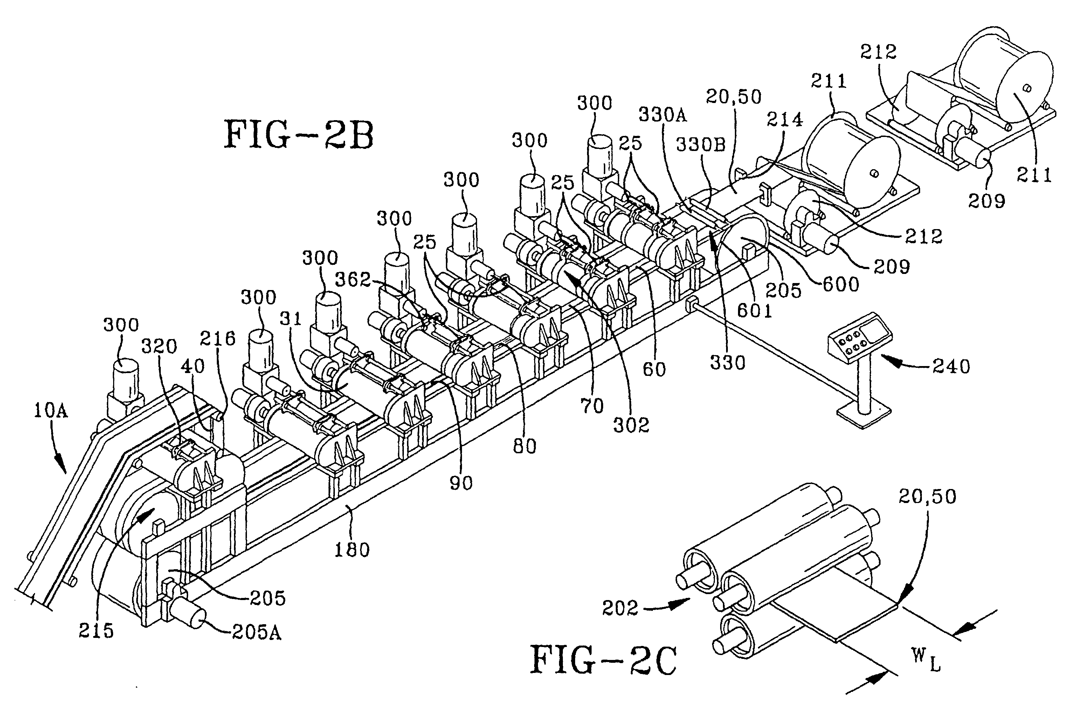

Referring the Figs. 1, 2A and 2B there are illustrated three exemplary uses of the apparatus 200 for building a laminate 10A from an assembly of tire components suitable for use in a pneumatic tire. The apparatus 200 and the alternative methods of using it are disclosed after a discussion of the laminate 10A.

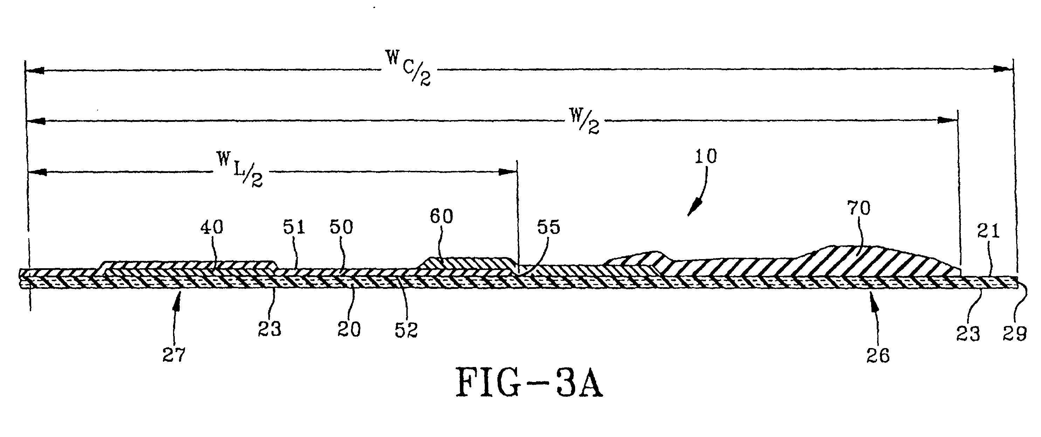

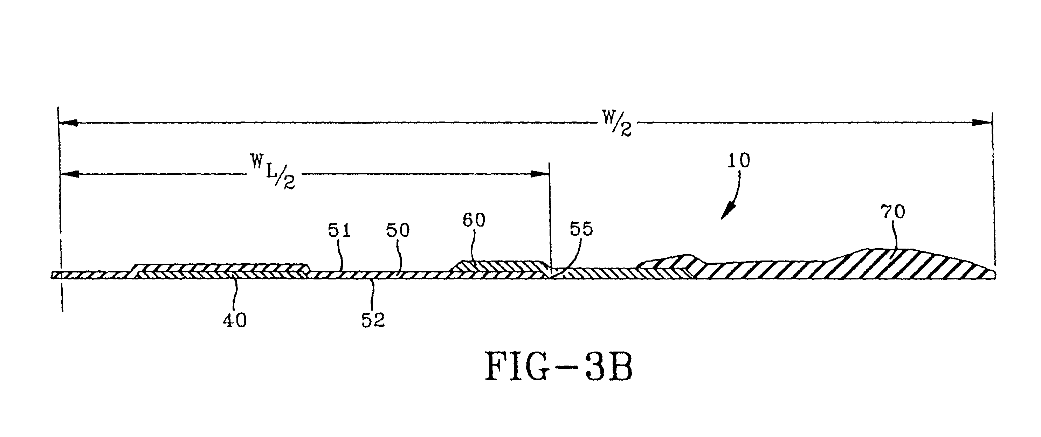

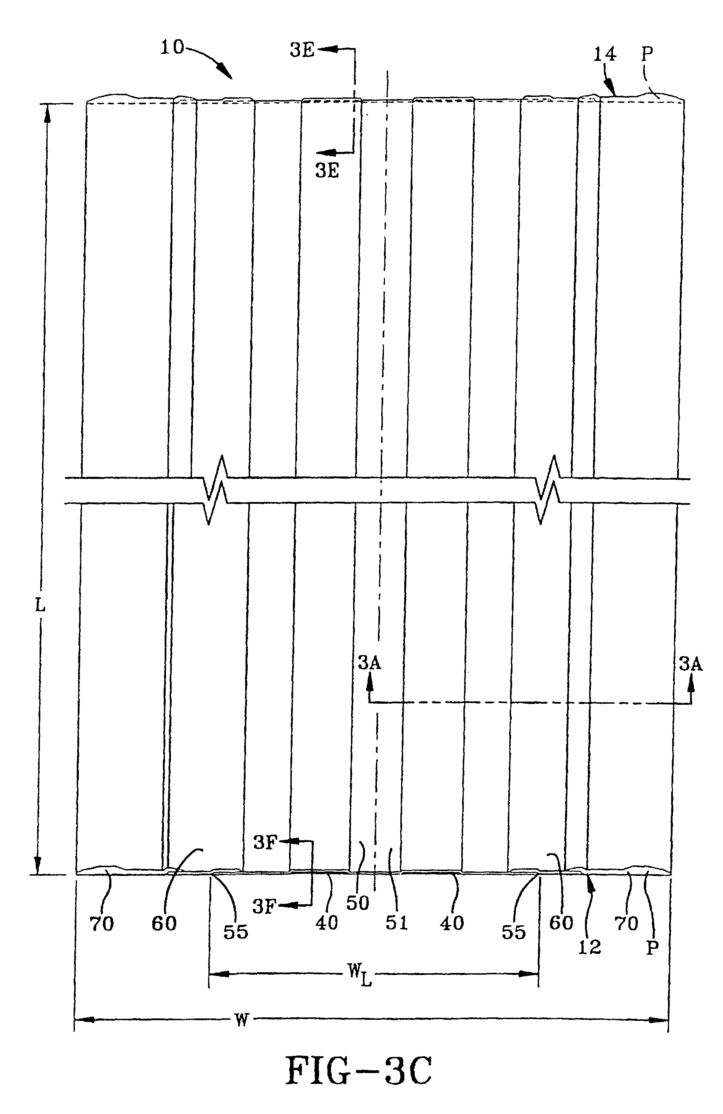

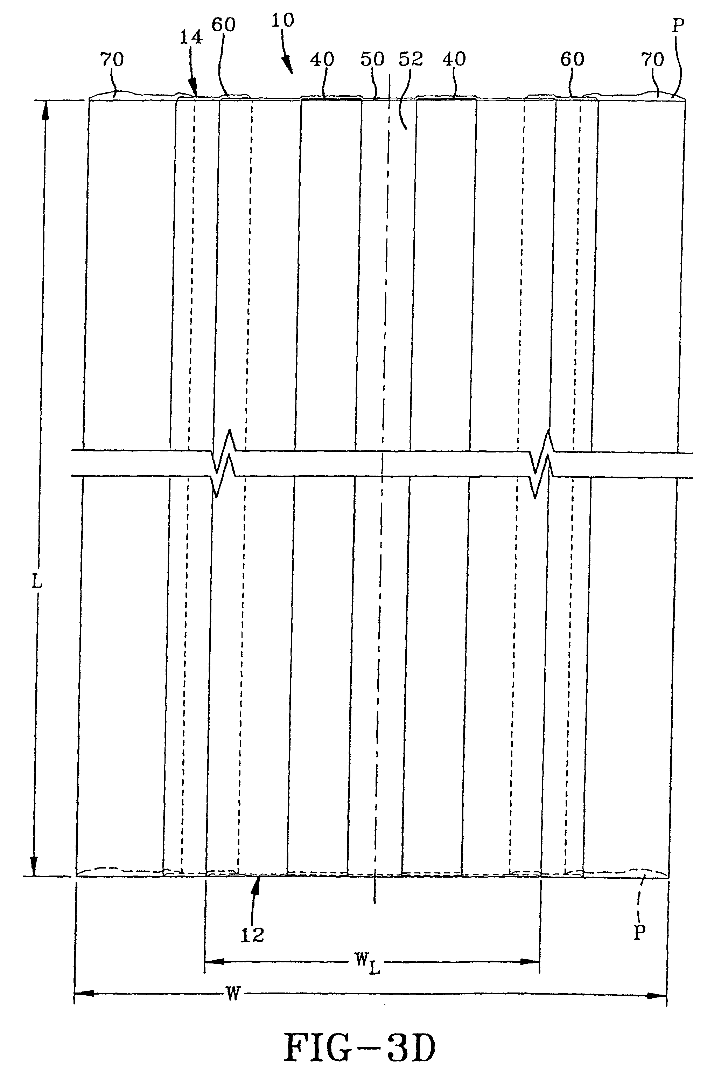

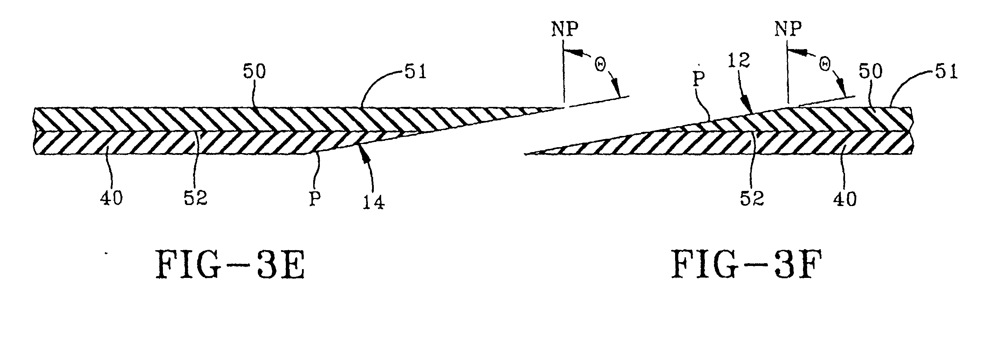

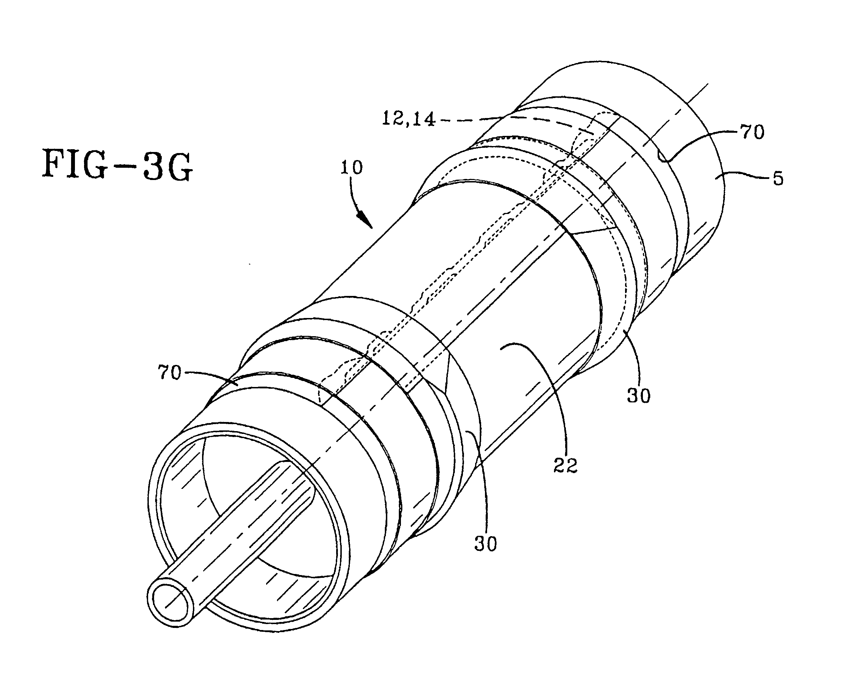

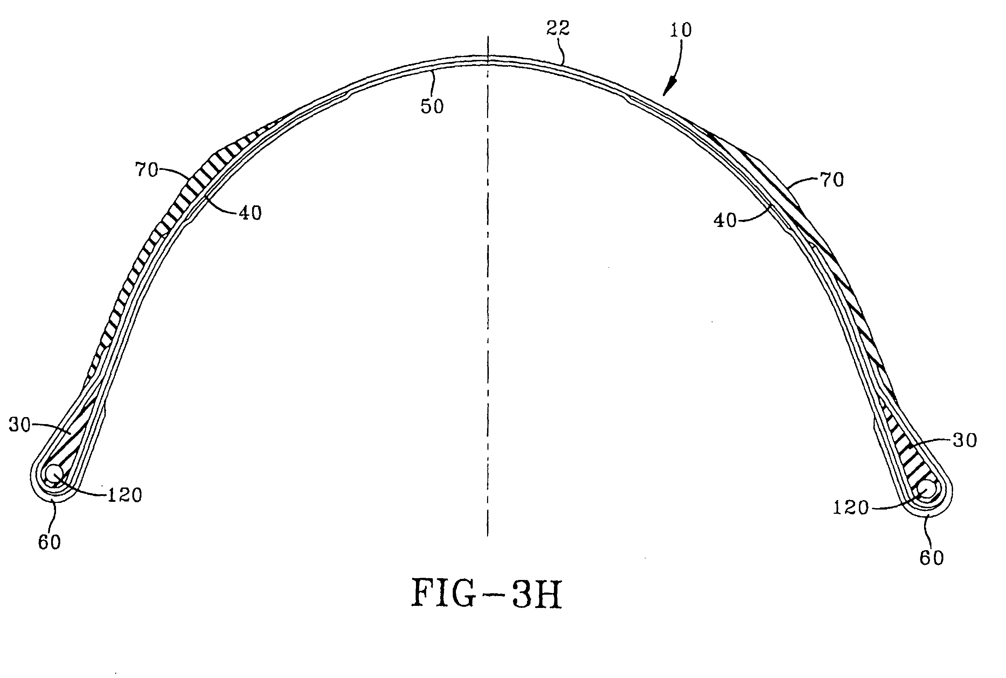

The preferred embodiment of the invention is a laminate 10A as illustrated in Fig. 3A,3B,3C,3D,3E and 3F which is formed as a substantially flat composite structure having many tire components attached and adhered to each other thus forming a laminate or tire subassembly, the laminate and the subassembly being referenced by numeral 10A and 10 respectively. It is understood that in all cases the laminate 10A and the tire subassembly 10 are identical in construction except in the case where a carrier member is used and the carrier member 20 is not to be part of the subassembly 10. In that case, the carrier member 20 is removed prior to cutting the laminate 10A and is no longer part of the subassembly 10 used to build a tire. Thus, for simplicity in describing the invention the subassembly and the laminate are similarly identified by the reference numerals 10 and 10A respectively.

As shown all of the components are either sheets or strips of material of substantially the same length. Each component shown is precisely located laterally relative to one another. This laminate 10A is described in co-pending patent application Serial Number 08/573,341 (attorney docket number 95188A) entitled "AN UNVULCANIZED NONCORD REINFORCED SUBASSEMBLY FOR INCORPORATION IN A TIRE CASING" which is incorporated herein by reference.

Fig. 3A depicts a carrier member 20, the carrier can be a fabric or a vulcanized rubber sheet, more preferably the carrier member 20 can be substituted for or eliminated by the liner component 50 formed on the apparatus 200 as shown in Fig. 1 or supplied in rolls 211 to the apparatus 200 as in Fig. 2B. The carrier 20 is not specifically identified in Figs. 3B through 3G; it can be assumed that the carrier member has been removed or is replaced by the liner component 50. As shown in Fig. 3A, the member 20 has a first outer and second inner surface 21,23 and a pair of lateral edge portions 26 located at the lateral extremes 29 of the member 20 all the subassembly tire components being located inward of the lateral edges 29.

When the liner 50 is employed as or replaces the carrier member 20 as shown in Figs. 1 and 2B, components such as shoulder gum strips 40 can be attached to the second surface or side 52 of the liner component either by forming the shoulder gum strip 40 first and affixing them to the conveyor 207 then forming the liner 50 and simultaneously applying the liner to the strips overlaying the strips 40, each component being precisely located on the conveyor 207 such that the shoulder gum strips 40 are precisely laterally positioned relative to the liner edges 55, as shown in Fig. 3A, alternatively, the liner 50 can be inverted and the shoulder gum strips 40 attached to the second surface 52 just prior to being wound onto large spools 210 as shown in Fig. 2B.

The alternative method of construction shown in Fig. 2A involves the use of a carrier member 20 which can be a fabric or vulcanized rubber sheet or any type of reinforced or unreinforced sheet stock which need not actually be part of the finished tire but simply facilitates the assembly of the tire casing subassembly 10. In such a case the width (W_{c}) of the carrier member is preferably greater than the overall width (W) of the laminate 10A.

In an earlier patent application applicants disclosed the use of unvulcanized ply stock to perform the function of a carrier member 20. In that application Serial Number 08/369,026 entitled "A PNEUMATIC TIRE AND AN UNVULCANIZED CARCASS AS AN INTERMEDIATE ARTICLE IN ITS MANUFACTURE," the reinforced ply member did become part of the tire. This was made feasible by employing a unique cutting method. In this application a unique cutting method disclosed in patent application Serial No. 08/279,943 entitled "A METHOD AND APPARATUS FOR CUTTING OF ELASTOMERIC MATERIALS" is preferably employed to achieve the tire uniformity benefits, however, many of the manufacturing efficiencies can be achieved regardless of the cutting method employed.

The reader is directed to the following description of the laminate 10A bearing in mind that the liner component 50 can be substituted as the carrier member 20 accordingly, it being understood that when doing so, the liner 50 is performing the function of the carrier member 20.

With reference now to Fig. 3A, axially inward of the lateral edge portions 26 and attached to an outer surface 21 of the member 20 is a pair of shoulder gum strips 40. The shoulder gum strip acts as a rubber reinforcement in the shoulder portion 27 of the tire casing subassembly 10.

A liner component 50 is attached to the member 20 and over the shoulder gum strips 40. The liner 50 creates an air impervious barrier for the radially inner air chamber of the tubeless type tire. These liners are generally made of Halobutyl rubber. The liner 50 has an axial width W_{L} equal to or narrower than the width W_{C} of the carrier member 20. The liner width W_{L} is sufficient to traverse axially outward of the beads when the tire is formed thus forming an air tight chamber between the tire and the wheel upon assembly. The liner has a first surface 51 and a second surface 52.

A chafer component 60 is shown at each lateral end 55 of the liner 50. The chafer 60 is attached to the liner 50, and to the outer surface 21 of the carrier member 20 and is slightly overlapped by a sidewall component 70 which is added after the chafer 60. The chafer 60 is positioned axially to provide a tough rubber reinforcement between the tire 100 and the rim flange of the wheel and is accordingly located in the bead region of the finished tire.

A sidewall component 70 is shown attached to the carrier member 20 and slightly overlapping the chafers 60 and extends laterally outward of the lateral ends 55 of the liner 50.

Optionally, to build an outlined white letter tire or a whitewall tire, a whitewall strip 80 and a cover strip 90 may be added to the laminate 10A as shown in Fig. 1 and Fig. 2A. Additionally, inserts 31 may be added in the sidewall region of the subassembly. This is particularly useful in run-flat tire construction and is shown in Fig. 2B.

The above description of the laminate 10A includes most of the unreinforced elastomeric components required to build a tubeless tire and it is considered to be the best mode of practicing the invention because it is a most efficient method to produce such a subassembly 10.

Additionally, it is considered within the scope of the invention that the laminate 10A may be built to include one carrier member 20 and at least any two of the unreinforced components selected from the groups of components used in the manufacture of tires. Preferably all the laminated components when cut to length form an individual subassembly 10 having the unique common splice feature as achieved in co-pending patent application Serial Number 08/299,943 entitled "A METHOD AND APPARATUS FOR CUTTING OF ELASTOMERIC MATERIALS" which is incorporated herein by reference.

Prior to cutting the laminate 10A, the carrier member 20 when not part of the tire construction is removed and rewound onto spools 211. When the liner 50 is employed as the carrier member the entire laminate 10A is cut. The following describes the preferred method of cutting and splicing the subassembly 10 as further illustrated in Figs. 3B through 3G.

Figs. 3C and 3D depict the first end 12 and second end 14 respectively of the tire casing subassembly 10, As illustrated, both ends 12,14 are cut along an axial or lateral extending substantially straight line path substantially parallel to the width (W) of the laminate 10A yielding a shortest possible cut. Alternatively, the cut ends 12,14 can be obliquely cut relative to the width (W) of the laminate creating a straight line cut on a bias angle. These straight line cuts create a first end or surface area 12 and a second surface area 14. As shown in Figs. 3E and 3F the surface areas 12 and 14 are lying in a substantially flat plane (P) and are inclined at an angle θ less than 90° relative to a normal plane (NP), the normal plane (NP) being perpendicular to the laminate 10A. In this application the preferred embodiment has the angle θ being about 80°. This high angle of inclination provides a large surface area of adhesion when the two ends 12,14 are spliced at the building drum 5 as shown in Fig. 3G.

The laminate 10A when manufactured as shown in Figs. 1, 2A or 2B can be made into continuous rolls 210. The laminated material 10A is then, in its preassembled state, stored in large rolls 210 which when sent to a tire building station is cut into sections of a precise length (L) by the unique cutting apparatus. The cut to length subassembly 10 is formed into a cylindrical shape as shown in Fig. 3G to which, at least one ply 22, a pair of apexes 30 and bead cores 120 are attached. After forming the turnups, by rolling the ply turnup, sidewalls and the chafers axially inward over the beads the tire carcass is toroidally shaped as shown in Fig. 3H effectively stretching the sidewalls radially outwardly creating an unvulcanized tire carcass.

Having described the laminate 10A, the readers attention is referred back to Figs. 1, 2A and 2B for a description of the unique apparatus 200 used to form the laminate 10A. The apparatus 200 of Fig. 1 is substantially the same as the apparatus 200 of Figs. 2A and 2B with the exceptions that the apparatus 200 of Figs. 1 and 2B uses either freshly formed liner 50 or rolls of unvulcanized liner 50 as the conveying carrier member 20. The apparatus 200 includes a calender assembly station 300 to apply a pair of elastomeric shoulder strips 40 to one side 23 of the conveyed carrier member 20. The shoulder strips are attached to a second side 52 of the liner 50 opposite to other tire components which are adhered to the first side 51 therefore the conveyed laminate 10A can be reversed in orientation to facilitate applying the formed shoulder strips 40 as shown in Fig. 2B or alternatively formed first and affixed to the conveyor 207 prior to forming the liner 50 and overlaying the liner 50 onto the conveyor 207 and shoulder strips 40 as shown in Fig. 1. The result in either method is that the shoulder gum strips 40 are attached to the liner 50 on a side 52 opposite the other components.

In the method of practicing the invention as shown in Fig. 2B the roll 211 of carrier material 20 is the liner 50 which is formed by conventional calendering means 202 illustrated in Fig. 2C and then cut to width. The cut liner stock 50 is spliced together forming lengths of material which are placed onto the roll 211, as shown in Fig. 2B. These full rolls of liner 211 are placed at one end of the apparatus 200. The rolled liner material 50 may have a woven separation liner 11 attached to one side 52 of the liner. The operator attaches the separation liner 11 to a motor 209 driven windup spool 212 and he stitches the liner material 50 to a conveyor means 204 after feeding the liner material 50 through a pair of lateral position sensors 214 which monitor the alignment and position of the lateral edges 55 of the liner material 50. The conveyor means 204 has two large rotating drums 205 attached to a rigid frame 180. Wrapped over the drums is a conveying belt 207. The endless conveying belt 207 is preferably inextensible and made of stainless steel material. The output end of the apparatus 200 has the rotation drum 205 driven by a variable speed motor 205A.

A means 330 for stitching the liner 50 to the conveyor 207 is shown. The means 330 for stitching as shown is a pair of rollers 330A,330B. Alternatively, the mean for stitching may be any device that applies pressure to the liner material 50 affixing it to the belt 207, such devices can include individually spring loaded roller bearings aligned in multiple rows.

The conveyed liner material 50, with the width (W_{L}) oriented at an angle perpendicular relative to the direction of conveyance, stitched to a conveying belt 207, is moved at a predetermined speed past a plurality of means 300 for forming one or more continuous strips of elastomeric tire components, the strips of tire components each having a predetermined cross section formed by a component forming depression machined into one of the colander rollers 350,352.

The means 300 for forming the tire components preferably has a plurality of calender assemblies 302.

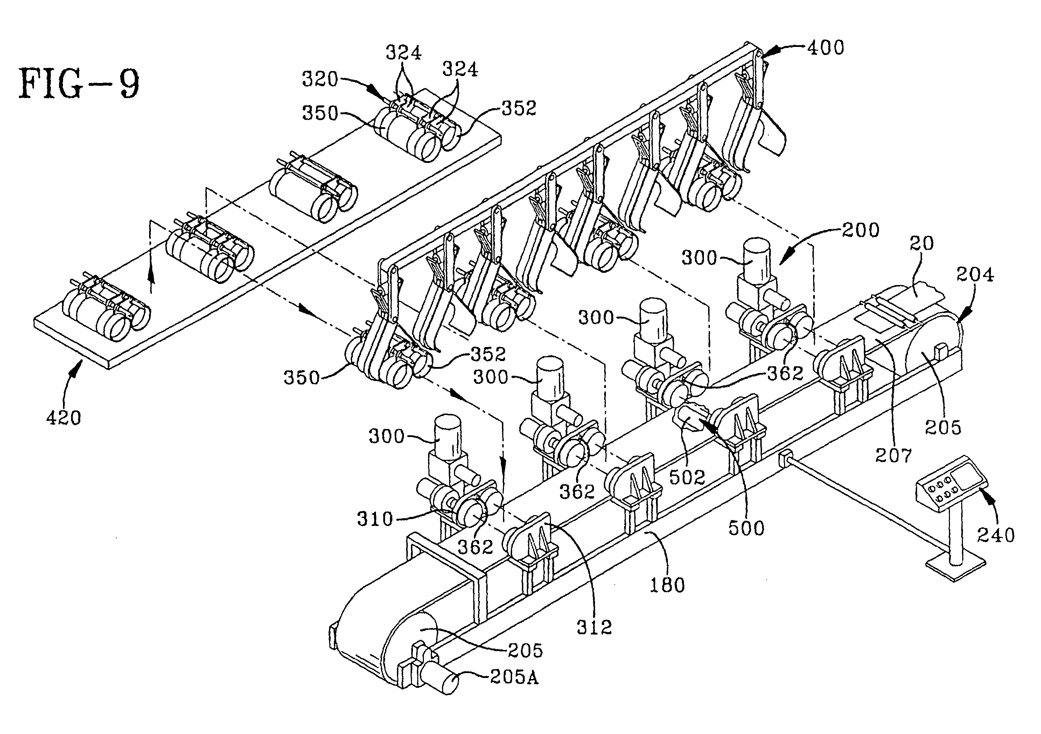

While forming the tire components the apparatus 200 includes a plurality of means 502 for applying the formed components directly onto at least one side 21 or 23 of the conveying carrier material 20 or to one side 51,52 of the liner member 50 when functioning as the carrier member 20 as shown in Fig. 9. The means 502 for applying the tire component is a roller commonly referred to as a pinch roller mechanism. One roller 502 is placed under the conveyor 207 and applies pressure between the conveying material 20 and the formed component at each calender thus insuring the component transfers to the conveying laminate 10A. Under the belt is a means 600 for laterally positioning and guiding the belt 207. The belt 207 has a pair of guide rails 601 adhered to the underside. One rail 601 at each of the lateral edges of the conveyor belt 207. The guide rails 601 are precisely located laterally by the conveyor drums 205. The guide means 600 are fixed laterally by the pairs of rollers 205. One roller 205 being at each end of the conveyor. The continuous guide rails 601 closely pass between the pinch rollers 502 also preventing the conveyor 207 from wandering laterally and further insuring the lateral location of the belt 207 relative to component forming depressions 356. Thus insuring positive and accurate placement of the formed component. The formed laminate 10A with all tire components assembled can then be cut to a length suitable for building a tire subassembly 10 or as illustrated in Fig. 1 the laminate 10A can have a separation liner 11 attached to one side of the laminate 10A and be wound onto a large roll 210 or spool. The large roll 210 as shown is driven by a motor 209 to facilitate winding the laminate 10A onto roll 210. As illustrated each roll 210,211 or spool 212 is placed on a pair of rollers. Alternatively, each roller may have an axle which is supported and may be motor driven to accomplish what is shown in Fig. 1. When a sufficient amount or a predetermined length of the laminate 10A is wound onto a roll, the laminate 10A is cut preferably parallel to the width (W).

During the procedure of cutting the roll 210 of laminate 10A it is recommended that a duplicate laminate back up station or roll 210 be provided so that the apparatus 200 can either continue forming the laminate 10A or at least to minimize the stoppage of the machine for carrier member roll 211 and laminate roll 210 changing.

Similarly, as illustrated in Figs. 2A and 2B the supply of rolls 211 of material are best handled by having aligned rolls 211 of stock available to keep the apparatus 200 in a constant supply of material.

This may require the employment of a conventional overhead conveyor positioned between the apparatus and the first roller 210 or 211 to facilitate roller changeover, the overhead conveyor not illustrated.

Once a laminate roll 210 is full it can be transported to a storage area or directly to a tire building work station. Once at the tire building station the subassembly 10 can be cut into sections of a predetermined length and applied to the tire building drum 5 as shown in Fig. 3G.

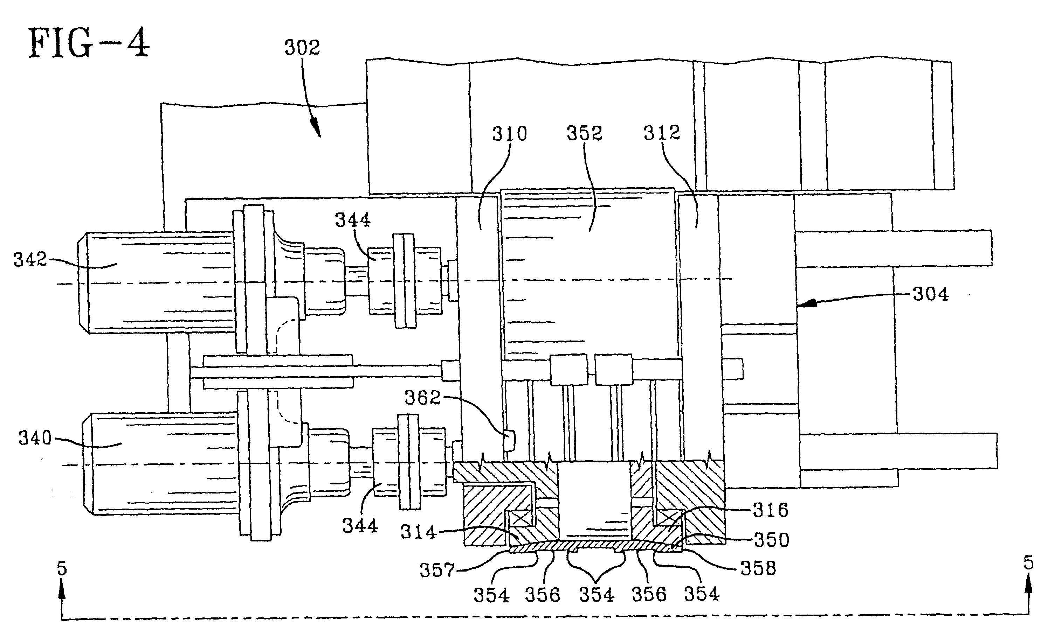

With reference to Fig. 4, a detailed view of a calender assembly 302 is shown. In the preferred embodiments of the invention the apparatus includes a plurality of calender assemblies 302. Each calender assembly 302 is fundamentally the same as the next or adjacent one with the exception of the pair of calender rollers 350,352.

Each calender assembly 302 represents a means for forming an elastomeric strip or strips of tire components. Preferably each calender 302 includes a means 360 for delivering processed elastomeric material 25 to the nip 354 of the two calender rollers 350,352, the nip 354 being between the two calender rollers. The means 360 for delivering processed elastomer material 25 as shown is an extruder, preferably each apparatus 200 includes at least one such extruder 360, more preferably each calender assembly 300 includes one extruder 360.

The calender assembly 302 has a means 320 for laterally positioning the processed elastomeric material 25 at a predetermined lateral location above the calender rollers 350,352. The means 320 for positioning as shown in Figs. 1, 2A and 2B are called plows 320. At least one pair of plows 320 is laterally positioned at a predetermined location radially above the pair of calender rollers 350,352. Each plow 320 has two rigid members 324 contoured to precisely fit above and between the two rollers. Preferably each plow rigid member 324 is placed laterally adjacent to a lateral end 354 of a component forming depression 356 located on one or both of the calender rollers 350,352. This positioning of the plows 320 secures and provides lateral support while preventing an overflow of calendered material from forming and adhering to the conveying carrier material 20.

The lateral position of the component forming depressions 356 are precisely located relative to the conveyor belt 207 of the apparatus 200. This insures that each component as it is formed is aligned and affixed to the conveying carrier member 20 or the liner 50 and the previously formed and attached components at a precise lateral location relative to the components to which it is being attached. The precise lateral positioning insures that each component is properly located and enables minimal material variation to be achieved while also reducing the relative size of each component due to tolerance variations that occurred in the prior art method of assembly.

The extruder 360 feeding processed material 25 to a pair of calender rollers 350,352 can be provided with a single feed source to produce one component such as the liner 50. However, when two similar components such as the gum shoulder strips 40, or the sidewalls 70, or the chafers 60 are being formed, the extrudate can be split into two flow paths. One flow path feeding each component forming depression 356 as shown in Figs. 1 and 2A.

In order for the apparatus to function automatically, a means 362 for sensing and metering the flow of extrudate to the calenders must be provided. The means can simply be a sensor used in combination with the valving of the flow or the speed of the extruder or both. Nevertheless, it is believed preferable that the extruded material delivered to the calenders be monitored and controlled.

As shown in Figs. 1 and 2A a sensor can be provided in each calender assembly station, the sensors connected to a control panel 240 which can automatically adjust the flow of extrudate at a given station 300. The sensors 362 can be individual video cameras which send a picture back to a monitoring computer at the control panel 240. As shown, the sensor is a video camera and the plows 324 are transparent for viewing through. Alternatively, the video sensor could be relocated if the plows were not transparent. Alternatively, the fencers 362 can be strain gauges or pressure transducers located in or on the plows 324 which relay information to the controller, which in turn regulates the material flow to the nip of the respective calender rollers by adjusting either the speed of the extruder or by diverting the material flow.

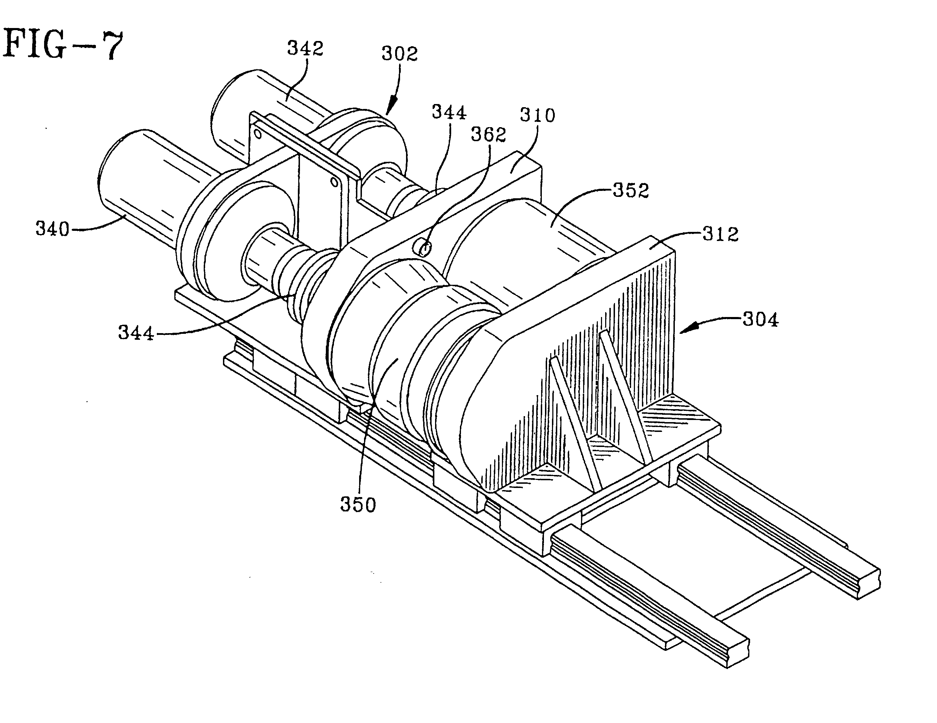

As shown in Figs. 4 through 8 each calender assembly 302 has two calender rollers 350,352, one roller being the transfer roller, the other being the follower roller 352. Each roller 350,352 is a hollow generally cylindrical structure opened or tapered at each end 357,358 and having an axis of rotation R.

The calender assembly 302 has a means 304 for supporting the two calender rollers. The means for supporting the rollers has a first end 310 and a second end 312. The first end 310 and the second end 312 each have a pair of rotatable hubs 314,316, one hub 314,316 fitting into each end 357,358 of the roller 350,352. The pair of hubs 314,316 for fitting into a roller have an axis of rotation R_{H} coincident with the axis of rotation R of the roller. Each hub 314,316 is conically tapered at an angle α of about 6°. The cylindrical rollers 350,352 are similarly tapered so that upon assembly the fitment is secure so that no slippage occurs that might create a nonuniformity in the formed component. Additionally, slippage prevention can be achieved by using a pin and a slot to fix the rollers.

As further illustrated in Fig. 4 each calender assembly 302 has at least one, preferably two motors 340,342, a drive shaft or coupling 344 powered by each motor, the drive shaft being connected to a rotatable hub 314, the hub 314 providing rotational movement of one of the calender rollers 350 or 352.

Although one motor 340 is sufficient to drive one roller 350 it is believed preferable to have two variable speed motors 340,342, one motor driving each roller 350,352. The first motor 340 being connected to a roller 350 called the transfer roller 350 is synchronized to match the linear conveyor belt 207 speed so that the formed tire component can be applied to the conveying ply material 20 at about the same rate of speed at which the component is being formed, or possibly at a slightly different speed.

The second motor 342 is connected to the roller 352 called the follower roller 352 and it provides rotational movement at a speed of about 95% that of the first motor 340. This differential speed of the rollers 350,352 insures that the calendered component always adheres to the conveying member 20 as opposed to attaching itself onto the following roller 352.

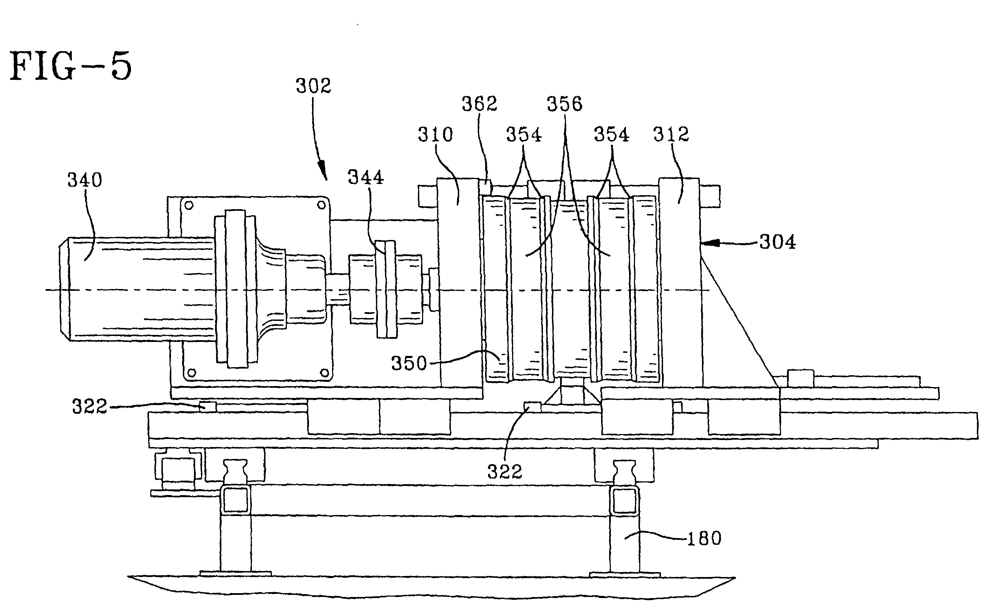

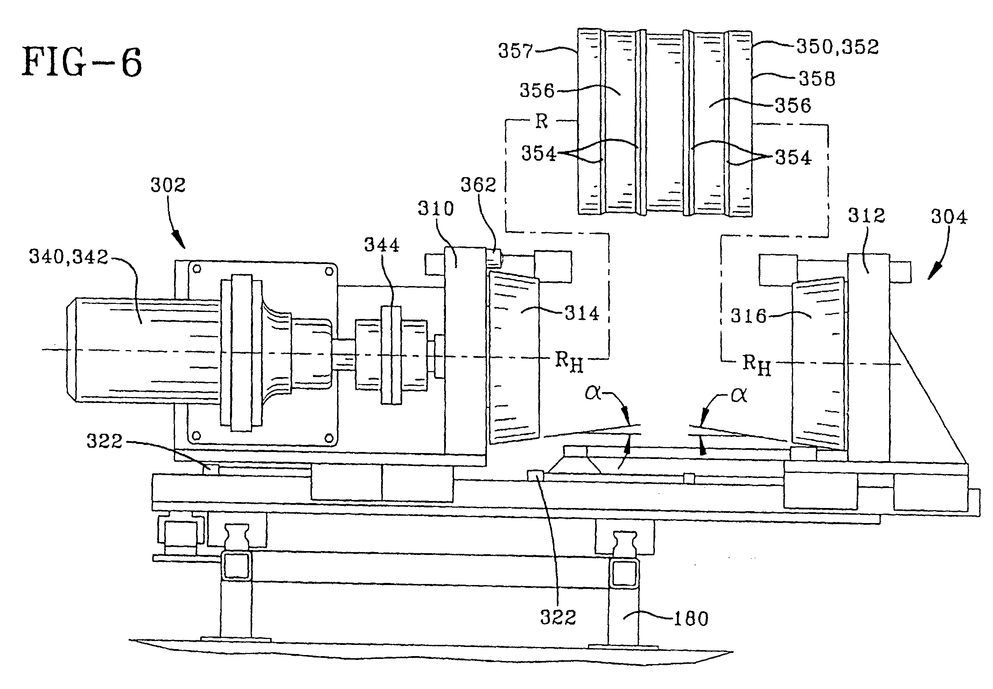

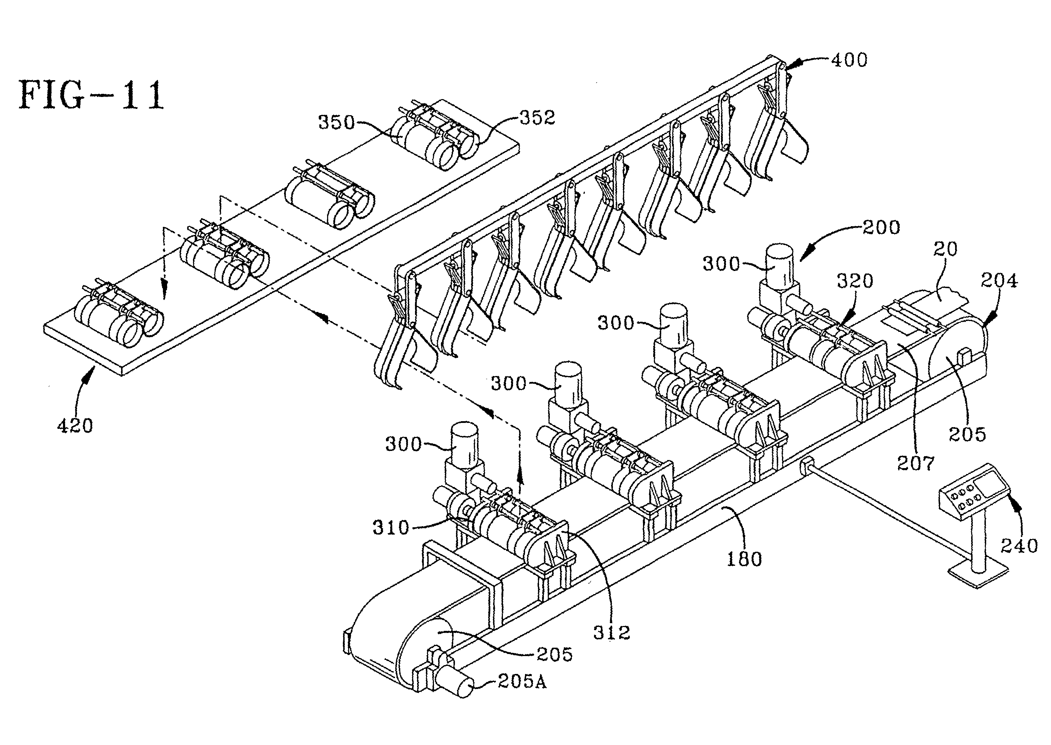

As shown in Figs. 5 through 11 each calender assembly 302 is adapted for quick roller changeover. This feature is accomplished in part by the method of attaching the roller cylinder 350,352 to a pair of tapered hubs 314,316 and by providing a means 322 for slidably expanding and retracting relative to one another the first and second ends 310,312 of the means 304 for supporting the calender rollers . As shown in Fig. 6 the second end 312 is slidably attached to the frame 180 of the apparatus 200 and upon actuation of a hydraulic cylinder 322 the second end 312 can slidably expand or retract thus permitting quick removal of the calender roller 350,352.

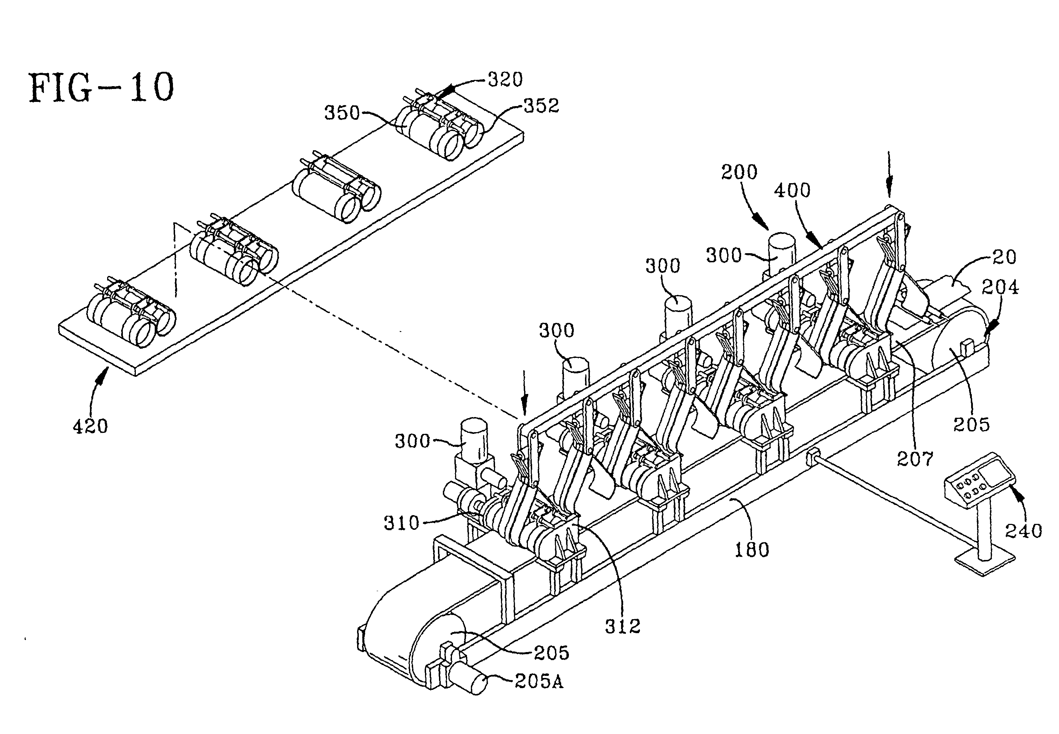

Figs. 9 through 11 illustrate how pairs of these quick change rollers 350,352 can be conveyed by an overhead transfer mechanism 400 to initially add the roller pairs to the apparatus 200. The mechanism 400 is lowered into position where the end of the support means 312 is closed to secure the calender rollers 350,352 into position as in Fig. 10. The overhead mechanism is then moved back to a roller staging area 420 awaiting the next set of roller pairs 350,352 to build a different size or style tire 100.

The apparatus 200 as illustrated has the conveying material 20 supported on a stainless endless belt 207. At each calender assembly station 300 a means 500 is provided for applying the plurality of continuous strips of elastomeric tire components to at least one side 21,23 of the conveying material 20 while the member 20 is being conveyed to form a laminate 10A. The means 500 for applying as shown is a pinch roller 502 located below the stainless belt 207. The pinch roller 502 applies localized pressure between the belt 207 and conveying member 20 and the transfer roller 350 which is carrying the formed tire component. This applied pressure adheres the component to the member and thereby released the component from the transfer roller.

With regard to Fig. 2A it can be seen that when adding a shoulder strip to the liner 50, when the liner 50 is the conveying member 20 supplied in rolls 211, it is desirable to reorient the material 20 such that the second side 52 of the liner material 50 is available to receive the tire component. This is believed best accomplished by transferring the laminate 10A to a second conveyor 215 and then forming and applying the component as previously described and then to pull the laminate 10A off the second conveyor 215 over a series of rollers 216 and then either wind the material onto a roll 210 or cut it to the desired subassembly length for immediate assembly into a cylindrical subassembly 10 at one or more tire building stations.

The above method of forming and applying the tire components to the conveying subassembly not only provides a more precise method of manufacture, it also increases the overall adhesion of the various components. By being formed and laminated to the conveying components while still hot these strips of components have adhesion characteristics that are far superior to the prior art methods.

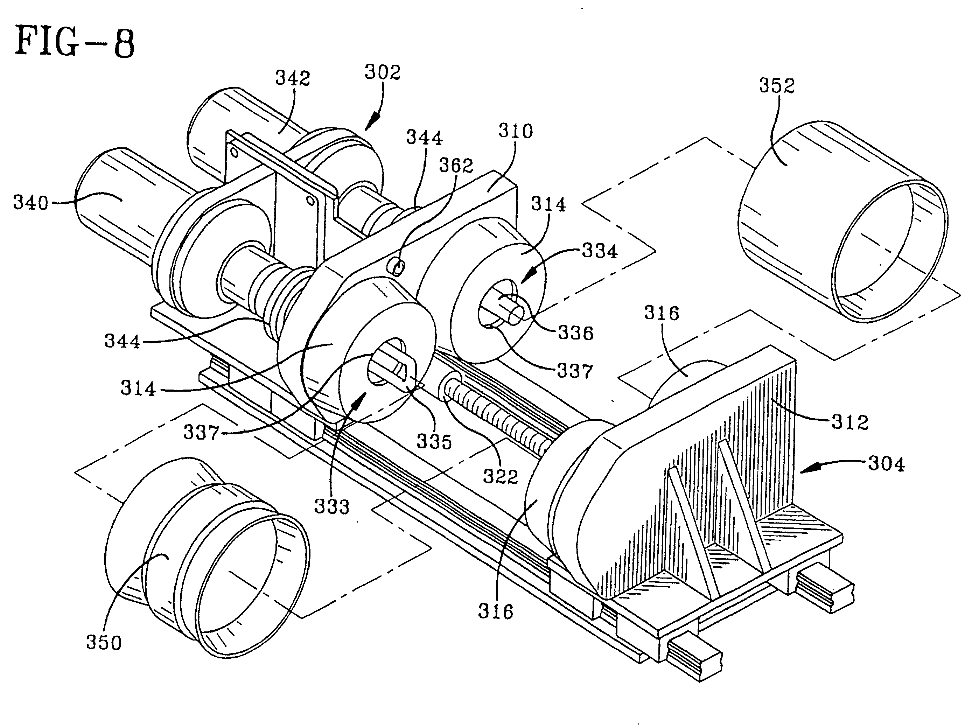

By winding the laminate 10A onto rolls 210 or by immediately building the cylindrical tire casing subassembly 10 the hot components are prevented from creating a differential shrinkage relative to the individual tire components or the carrier material 20 which can be generally cool upon assembly. Alternatively, although not required the carrier material 20 can be heated to approximate the temperature of the components. By using the liner component 50 formed at the apparatus in place of the carrier member 20 further avoids temperature related shrinkage differentials. In one embodiment the calender assembly 302 includes a means for heating 333 or a means for cooling 334 the calender rollers 350,352. The means for heating 333 has a heating element 335 and the means for cooling 334 has a cooling element 336. The means 333,334 enter through an opening 337 in the hubs 314 or 316 as shown in Fig. 8. Each means 333, or 334 generates heating or cooling to the internal surfaces of the rollers 350,352 and are employed when the material being processed can be more efficiently applied using such a feature.

It is believed that the method and apparatus 200 described and claimed is a significant advancement in the state of tire building technology. Tires built according to the description of this and the related applications have yielded excellent burst strength while achieving superior building uniformity characteristics.

## Claims

1. An apparatus (200) for building a laminate (10A) from an assembly of unreinforced tire components suitable for use in a pneumatic tire (100), the apparatus comprising:
- means (204) for conveying the subassembly (10) of tire components with the width of the subassembly oriented at an angle perpendicular relative to the direction of conveyance;
- calender assemblies (302), spaced along the conveying means for forming simultaneously a plurality of continuous strips of elastomeric tire components, the strips of tire components having predetermined cross sectional profiles; and
- means (502) for applying each of the formed continuous strips of tire components to one or more of the components of the subassembly (10) while the subassembly is being linearly conveyed and as the continuous strips are being formed, thereby, to form a laminate (10A), **characterized**
**by** the calender assemblies having means (304) for supporting a pair of calender rollers (350,352), the means for supporting the pair of rollers comprising a first end (310) and a second end (312), the first end (310) and the second end (312) each having a pair of rotatable tapered hubs (314,316) one hub (314,316) fitting into each end (357,358) of the rollers (350, 352);
by means (322) for slidably expanding and retracting relatively to one another the first and second ends (310,312) for a quick roller changeover; and
by at least one roller having a component forming depression (356) for forming simultaneously said plurality of continuous strips of elastomeric components.

2. The apparatus of claim 1 comprising a means (209) for tensioning and winding the laminate onto a roll (210).

3. The apparatus of claim 1 wherein there is a carrier member (20) to which the continuous strips of elastomeric material are applied, the carrier member being a liner component (50).

4. The apparatus of claim 1 wherein there is a carrier member (50) which is formed at the apparatus by one of the means (202) for forming a plurality of continuous strips of tire components.

5. A method for building laminates (10A) from an assembly of unreinforced and unvulcanized tire components suitable for use in forming subassemblies (10) for casings of pneumatic tires (100) of different size or style using the apparatus (200) according to any of claims 1-4, the method comprising the steps of forming simultaneously the plurality of continuous strips of elastomeric tire components by said component forming depressions (356) of the quick changeover calender rollers (350, 352) for a particular sized tire; positioning, and attaching, from the component forming depressions, the formed strips of tire components to one another as they are conveyed thus forming a laminate of unreinforced tire components suitable for use in forming a tire subassembly; and providing the next set of calender rollers (350,352) to build a different size or style tire (100).

6. The method of claim 5 comprising the step of providing a linearally moving continuous sheet, the sheet, being a carrier member (20) to which the continuous strips of elastomeric tire components are attached.

7. The method of claim 6 wherein the carrier member (20) is a continuous sheet of unvulcanized liner material (50).

8. The method of claim 6 wherein the carrier member (20) is a woven cloth or other roll of material which does not form a part of the finished tire (100).

9. The method of claim 5 wherein the plurality of tire components are selected from a group consisting of a liner, shoulder gum strips, chafers, sidewalls, inserts, a whitewall strip and a cover strip.

10. The method of claim 5 comprising the steps of tensioning the laminate (10A) by directly winding the laminate onto a roll (210); and
cutting the laminate parallel to its width (W) when a predetermined length of laminate is wound into the roll.

11. The method of claim 10 further comprising the step of simultaneously forming the carrier member (20) while forming the plurality of continuous strips of elastomeric tire components.

12. The method of claim 5 wherein the step of applying the plurality of continuous strips of tire components includes the step of pressing the conveying member (207) against the formed strips of tire components thereby affixing the components to the member.

13. The method of claim 5 further comprising the steps of locating a lateral edge (55) of the conveyed carrier member (20) and applying the continuous strips of tire components at predetermined locations relative to the lateral edge.

14. The method of claim 5 further comprising the steps of extruding elastomeric material for forming at least one of the continuous strips of tire components and feeding the flow of extruded material (25) into calender rollers (350, 352) that determine the cross sectional shape of the tire component.

15. The method of claim 14 further comprising the step of splitting the flow of extruded material into two flows (25A, 25B) of extruded material into calender rollers (350, 352), each flow supplying material formed by the calender rollers into tire components of distinct cross sectional shape.

16. The method of claim 15 further comprising the step of metering the flow of extruded material (25), the flow being controlled to maintain a sufficient amount of extruded material in each calender bank.

17. The method of claim 5 further comprising the step of applying a separation liner (11) to one side of the laminate prior to winding the laminate onto a roll (210).

## Patentansprüche

1. Vorrichtung (200) zum Aufbauen eines Laminats (10A) aus einer Baueinheit aus unverstärkten Reifenbauteilen, die zur Verwendung in einem Luftreifen (100) geeignet sind, wobei die Vorrichtung umfasst:
- ein Mittel (204) zum Befördern der Unterbaueinheit (10) aus Reifenbauteilen, wobei die Breite der Unterbaueinheit unter einem Winkel senkrecht relativ zur Förderrichtung orientiert ist;
- Kalanderbaueinheiten (302), die entlang des Fördermittels beabstandet angeordnet sind, um gleichzeitig eine Vielzahl von kontinuierlichen Streifen aus elastomeren Reifenbauteilen zu bilden, wobei die Streifen aus Reifenbauteilen vorbestimmte Querschnittsprofile aufweisen; und
- ein Mittel (502) zum Auflegen von jedem der gebildeten kontinuierlichen Streifen aus Reifenbauteilen auf eines oder mehrere der Bauteile der Unterbaueinheit (10), während die Unterbaueinheit geradlinig befördert wird, und dadurch, wenn die kontinuierlichen Streifen gebildet werden, ein Laminat (10A) zu bilden,
**gekennzeichnet**
**dadurch, dass** die Kalanderbaueinheiten ein Mittel (304) aufweisen, um ein Kalanderwalzenpaar (350, 352) zu unterstützen, wobei das Mittel zum Unterstützen des Walzenpaares ein erstes Ende (310) und ein zweites Ende (312) umfasst, wobei das erste Ende (310) und das zweite Ende (312) jeweils zwei drehbare verjüngte Naben (314, 316) aufweisen, wobei eine Nabe (314, 316) in jedes Ende (357, 358) der Walzen (350, 352) passt;
durch Mittel (322), um das erste und das zweite Ende (310, 312) relativ zueinander für einen schnellen Walzenwechsel verschiebbar auszufahren und zurückzuziehen; und
dadurch, dass mindestens eine Walze eine Bauteilbildungsvertiefung (356) aufweist, um gleichzeitig die Vielzahl von kontinuierlichen Streifen aus elastomeren Bauteilen zu bilden.

2. Vorrichtung nach Anspruch 1,
die ein Mittel (209) zum Spannen und Wickeln des Laminats auf eine Rolle (210) umfasst.

3. Vorrichtung nach Anspruch 1,
wobei es ein Trägerelement (20) gibt, auf das die kontinuierlichen Streifen aus Elastomermaterial aufgelegt sind, wobei das Trägerelement ein Linerbauteil (50) ist.

4. Vorrichtung nach Anspruch 1,
wobei es ein Trägerelement (50) gibt, das an der Vorrichtung durch eines der Mittel (202) zum Bilden der Vielzahl von kontinuierlichen Streifen aus Reifenbauteilen gebildet ist.

5. Verfahren zum Aufbauen von Laminaten (10A) aus einer Baueinheit aus unverstärkten und unvulkanisierten Reifenbauteilen, die zur Verwendung bei der Bildung von Unterbaueinheiten (10) für Unterbauten von Luftreifen (100) mit unterschiedlicher Größe oder Ausführung unter Verwendung der Vorrichtung (200) nach einem der Ansprüche 1 - 4 geeignet ist, wobei das Verfahren die Schritte umfasst, dass die Vielzahl von kontinuierlichen Streifen aus elastomeren Reifenbauteilen durch die Bauteilbildungsvertiefungen (356) der Schnellwechsel-Kalanderwalzen (350, 352) für einen besonders bemessenen Reifen gleichzeitig gebildet wird; aus den Bauteilbildungsvertiefungen die gebildeten Streifen aus Reifenbauteilen aneinander positioniert und angebracht werden, während sie befördert werden, wodurch ein Laminat aus unverstärkten Reifenbauteilen gebildet wird, das zur Verwendung bei der Bildung einer Reifen-Unterbaueinheit geeignet ist; und dass ein nächster Satz Kalanderwalzen (350, 352) bereitgestellt wird, um einen Reifen (100) mit unterschiedlicher Größe oder Ausführung aufzubauen.

6. Verfahren nach Anspruch 5,
das den Schritt umfasst, dass eine sich geradlinig bewegende kontinuierliche Bahn bereitgestellt wird, wobei die Bahn ein Trägerelement (20) ist, an dem die kontinuierlichen Streifen aus elastomeren Reifenbauteilen angebracht werden.

7. Verfahren nach Anspruch 6,
wobei das Trägerelement (20) eine kontinuierliche Bahn aus unvulkanisiertem Linermaterial (50) ist.

8. Verfahren nach Anspruch 6,
wobei das Trägerelement (20) ein gewobener Stoff oder eine andere Materialrolle ist, die keinen Teil des fertig gestellten Reifens (100) bildet.

9. Verfahren nach Anspruch 5,
wobei die Vielzahl von Reifenbauteilen aus einer Gruppe ausgewählt wird, die aus einem Liner, Schultergummistreifen, Wulstbändern, Seitenwänden, Einsätzen, einem Weißwandstreifen und einem Abdeckungsstreifen besteht.

10. Verfahren nach Anspruch 5,
das die Schritte umfasst, dass das Laminat (10A) gespannt wird, indem das Laminat direkt auf eine Rolle (210) gewickelt wird; und dass das Laminat parallel zu seiner Breite (W) geschnitten wird, wenn eine vorbestimmte Laminatlänge zu der Rolle gewickelt wird.

11. Verfahren nach Anspruch 10,
das ferner den Schritt umfasst, dass das Trägerelement (20) gleichzeitig gebildet wird, während die Vielzahl von kontinuierlichen Streifen aus elastomeren Reifenbauteilen gebildet wird.

12. Verfahren nach Anspruch 5,
wobei der Schritt des Auflegens der Vielzahl von kontinuierlichen Streifen aus Reifenbauteilen den Schritt umfasst, dass das Förderelement (207) gegen die gebildeten Streifen aus Reifenbauteilen gepresst wird, wodurch die Bauteile an das Element geklebt werden.

13. Verfahren nach Anspruch 5,
das ferner die Schritte umfasst, dass die Lage einer Seitenkante (55) des beförderten Trägerelements (20) festgelegt wird und die kontinuierlichen Streifen aus Reifenbauteilen an vorbestimmten Stellen relativ zur Seitenkante aufgelegt werden.

14. Verfahren nach Anspruch 5,
das ferner die Schritte umfasst, dass Elastomermaterial extrudiert wird, um mindestens einen der kontinuierlichen Streifen aus Reifenbauteilen zu bilden, und der Strom aus extrudiertem Material (25) in Kalanderwalzen (350, 352) eingespeist wird, die die Querschnittsform des Reifenbauteils bestimmen.

15. Verfahren nach Anspruch 14,
das ferner den Schritt umfasst, dass der Strom aus extrudiertem Material in zwei Ströme (25A, 25B) aus extrudiertem Material in Kalanderwalzen (350, 352) aufgeteilt wird, wobei jeder Strom Material zuführt, das durch die Kalanderwalzen zu Reifenbauteilen mit unterschiedlicher Querschnittsform ausgebildet wird.

16. Verfahren nach Anspruch 15,
das ferner den Schritt umfasst, dass der Strom aus extrudiertem Material (25) dosiert wird, wobei der Strom derart gesteuert wird, dass eine ausreichende Menge an extrudiertem Material in jeder Kalanderbank aufrechterhalten wird.

17. Verfahren nach Anspruch 5,
das ferner den Schritt umfasst, dass ein Trennungsliner (11) auf eine Seite des Laminats aufgelegt wird, bevor das Laminat auf eine Rolle (210) gewickelt wird.

## Revendications

1. Appareil (200) pour la confection d'un stratifié (10) à partir d'un assemblage de composant de bandage pneumatique exempt de renforcement à utiliser dans un bandage pneumatique (100), l'appareil comprenant :
- un moyen (204) pour transporter le sous-assemblage (10) de composants de bandage pneumatique, dans lequel la largeur du sous-assemblage est orientée en formant un angle droit par rapport à la direction de transport ;
- des assemblages de calandrage (302) qui sont espacés le long du moyen de transport pour former de manière simultanée plusieurs rubans en continu de composants de bandage pneumatique élastomère, les rubans des composants du bandage pneumatique possédant des profils prédéterminés quant à leur section transversale ;
- un moyen (502) pour appliquer chacun des rubans formés en continu des composants du bandage pneumatique sur un ou plusieurs composants du sous-assemblage (10) tandis que le sous-assemblage est transporté de manière linéaire et, au fur et à mesure de la formation des rubans en continu, pour former ainsi un stratifié (10A), **caractérisé**
**par le fait que** les assemblages de calandrage possèdent des moyens (304) pour supporter une paire de rouleaux de calandrage (350, 352), les moyens pour supporter les paires de rouleaux comprenant une première extrémité (310) et une deuxième extrémité (312), la première extrémité (310) et la deuxième extrémité (312) possédant respectivement une paire de moyeux rotatifs de forme conique (314, 316), chaque moyeu (314, 316) venant s'insérer dans chaque extrémité (357, 358) des rouleaux (350, 352);
par des moyens (322) pour écarter et rapprocher par glissement l'une par rapport à l'autre les première et deuxième extrémités (310, 312), pour un remplacement rapide des rouleaux, et
**par le fait qu'**au moins un rouleau possède un composant formant une dépression (356) pour la formation simultanée desdits plusieurs rubans en continu de composants élastomères.

2. Appareil selon la revendication 1, comprenant un moyen (209) pour la mise sous tension et l'enroulement du stratifié sur un cylindre (210).

3. Appareil selon la revendication 1, dans lequel on prévoit un élément de support (20) sur lequel on applique les rubans en continu de la matière élastomère, l'élément de support étant un composant isolant.

4. Appareil selon la revendication 1, dans lequel on prévoit un élément de support (50) qui est formé sur l'appareil par un des moyens (202) pour former plusieurs rubans en continu de composants de bandage pneumatique.

5. Procédé de confection de stratifié (10A) à partir d'un assemblage de composants de bandage pneumatique exempts de renforcement et à l'état non vulcanisé, approprié pour être utilisé dans la formation de sous-assemblages (10) pour des carcasses de bandage pneumatique (100) de dimension ou de style différent en utilisant l'appareil (200) selon l'une quelconque des revendications 1 à 4, le procédé comprenant les étapes consistant à : former simultanément lesdits plusieurs rubans en continu de composants de bandage pneumatique élastomère via ledit composant formant des dépressions (356) des rouleaux de calandrage (350, 352) du type à remplacement rapide, pour un bandage pneumatique de dimension particulière ; positionner et fixer, à partir du composant formant des dépressions, les rubans à l'état façonné des composants du bandage pneumatique l'un à l'autre lors de leur transport pour ainsi former un stratifié de composants de bandage pneumatique exempt de renforcement et approprié pour être utilisé dans la formation d'un sous-assemblage de bandage pneumatique ; et procurer le jeu suivant de rouleaux de calandrage (350, 352) pour la confection d'un bandage pneumatique (100) de style ou de dimension différente.

6. Procédé selon la revendication 5, comprenant l'étape consistant à procurer une feuille en continu se déplaçant en direction linéaire, la feuille représentant un élément de support (20) auquel sont fixés les rubans en continu des composants du bandage pneumatique élastomère.

7. Procédé selon la revendication 6, dans lequel l'élément de support (20) est une feuille en continu d'une matière de couverture (50) à l'état non vulcanisé.

8. Procédé selon la revendication 6, dans lequel l'élément de support (20) est une étoffe tissée ou un autre rouleau de matière qui ne fait pas partie du bandage pneumatique (100) à l'état fini.

9. Procédé selon la revendication 5, dans lequel lesdits plusieurs composants de bandage pneumatique sont choisis parmi le groupe constitué par un calandrage intérieur, des bandes de gomme d'épaulement, des bandelettes talon, des flancs, des pièces rapportées, un ruban de flanc blanc et un ruban isolant.

10. Procédé selon la revendication 5, comprenant les étapes consistant à mettre le stratifié (10) sous tension en enroulant directement le stratifié sur un cylindre (210) ; et à découper le stratifié parallèlement à sa largeur (W) lorsqu'une longueur prédéterminée de stratifié a été enroulée sur le cylindre.

11. Procédé selon la revendication 10, comprenant en outre l'étape consistant à former simultanément l'élément de support (20) tout en formant lesdits plusieurs rubans en continu de composants de bandage pneumatique élastomère.

12. Procédé selon la revendication 5, dans lequel l'étape consistant à appliquer lesdits plusieurs rubans en continu des composants du bandage pneumatique englobe l'étape consistant à appliquer l'élément de transport (207) contre les rubans des composants du bandage pneumatique, à l'état façonné, pour ainsi fixer les composants à l'élément.

13. Procédé selon la revendication 5, comprenant en outre les étapes consistant à positionner le bord latéral (55) de l'élément de support (20) à l'état transporté et à appliquer les rubans en continu des composants du bandage pneumatique à des endroits prédéterminés par rapport au bord latéral.

14. Procédé selon la revendication 5, comprenant en outre les étapes consistant à extruder une matière élastomère pour former au moins un des rubans en continu de composants du bandage pneumatique et à alimenter le courant de matière (25) à l'état extrudé dans des rouleaux de calandrage (350, 352) qui déterminent la configuration en section transversale du composant de bandage pneumatique.

15. Procédé selon la revendication 14, comprenant en outre l'étape consistant à scinder l'écoulement de la matière à l'état extrudé pour obtenir deux courants (25A, 25B) de matière à l'état extrudé pénétrant dans les rouleaux de calandrage (350, 352), chaque courant procurant une matière qui a été formée par les rouleaux de calandrage pour obtenir des composants de bandage pneumatique qui possèdent une configuration distincte en section transversale.

16. Procédé selon la revendication 15 comprenant en outre les étapes consistant à doser le courant de la matière (25) à l'état extrudé, le courant étant contrôlé pour maintenir une quantité suffisante de matières à l'état extrudé dans chaque cuve de calandrage.

17. Procédé selon la revendication 5, comprenant en outre l'étape consistant à appliquer une pièce d'écartement (11) faisant office d'élément de séparation sur un côté du stratifié avant d'enrouler le stratifié sur le cylindre (210).
